# EUROPEAN PATENT SPECIFICATION

(11) **EP 4 273 435 B1**
(45) Date of publication and mention of the grant of the patent: **02.07.2025**
(21) Application number: 22172054.3
(22) Date of filing: 06.05.2022
(51) Int. Cl.: F16L 55/168

(54) **PROTECTIVE SYSTEM FOR A STRUCTURE AND ASSOCIATED METHOD**
SCHUTZSYSTEM FÜR EINE STRUKTUR UND ZUGEHÖRIGES VERFAHREN
SYSTÈME DE PROTECTION POUR UNE STRUCTURE ET PROCÉDÉ ASSOCIÉ

(43) Date of publication of application: 08.11.2023
(73) Proprietor: Henkel AG & Co. KGaA, 40589 Düsseldorf (DE)
(72) Inventor: Schoene, Jens Roland, 85375 Neufahrn (DE)

(56) References cited:
- WO-A2-2008/071637
- AT-A- A 137 689
- AT-B- 392 342
- CA-A1- 2 858 810
- US-A1- 2009 308 475

## Description

### TECHNICAL FIELD

The invention relates to the field of prevention and repair of leaks in structures such as pipes or tanks and more particularly to a secondary containment system that delays the creation or worsening of a leak outside of the structure to allow preemptive and repair actions to be undertaken soon after a damage is detected in the pipe.

### TECHNOLOGICAL BACKGROUND

Structures enclosing fluids such as pipes or tanks are subject to wear and structural deterioration that can lead to failure which requires interventions to keep them operational.

Detecting a leak after its occurrence is generally considered as being ineffective as it leads to a disruption in the operation ("unplanned downtime") of the structure enclosing the leaked fluid. To reduce the losses incurred by leaks, it is customary to use leak detection sensors such as sensors detecting changes in the structural properties of a wall of the structure when the structure is subject to a certain strain or stress level, or by measuring a change in an electrical property within a leak sensor when in contact with the liquid.

WO 2008/071637 A2 disclose a cryogenic transfer hose for hydrocarbons comprising an inner hose, an outer hose arranged around the inner hose in a concentric manner and a spacer member bridging an annular gap between the inner and outer hoses, a fibrous insulation material forming a three-dimensional matrix of fibers being comprised in the annular gap. In an embodiment it is intended to place a sensor in the gap. US 2009/308475 A1 discloses a pipe liner comprising a plurality of fiber optic sensors positioned longitudinally on the base pipe. AT A 137 689 A is about a socket or branch connector for the sensor wires of leakage warning systems in insulated pipelines. The use of sensors reduces the duration of the disruption caused by a leak as it can be identified and located faster. However, the existence of the leak is not prevented and the disruption caused by the leak before the repair intervention occurs can still lead to significant losses.

In order to prevent or at least delay the occurrence of a leak, structures enclosing fluids such as pipes or tanks can be built with a secondary containment wall around the structure, thereby forming a first inner wall and an additional second outer wall separated by a spacer. In such a construction, the probability of an external leakage is reduced as a leak in the first inner wall does not necessarily immediately lead to a leak in the second outer wall.

These secondary containment protections are generally constructed coaxially to the first inner wall and form in essence a second container for the pipe or tank. However, such a construction requires the secondary containment to cover all of the structure which consists in an expensive solution and still fails to efficiently contain a leak in the event that two leaks are present, one in the first inner wall and the second in the second outer wall, even if both are spaced far apart. Even the use of sensing elements in particular pressure sensors or fluid detectors do not overcome the disadvantage that the spacer offers a poor containment of the fluid and the secondary containment needs to be larger than the entirety of the main containment.

For the above reasons, a protective system that can delay the leakage of a fluid outside of the structure in the event of a damage to the structure enclosing the fluid is sought.

### SUMMARY OF THE INVENTION

To address the above need, the invention provides aA protective system for a structure enclosing a fluid, such as a pipe or tank enclosing a fluid, the protective system comprising:
- a structure repair element (7) on at least one portion of an external surface of the structure (20) corresponding to a fraction of the external surface of the structure
- a containment material placed over the structure repair element (7),;
- at least one leak detection sensor arranged so that the containment material covers or encompasses the at least one leak detection sensor;
wherein the containment material is configured to collect at least a portion of the fluid in at least one cavity formed in the containment material thereby containing leakage of the fluid outside of the structure in the event of a leak in the structure in the at least one portion wherein leakage of the fluid into the containment material triggers a detection of the leak by the leak detection sensor;
- an outer hull (8) enclosing the containment material (5).

The use of a containment material configured to collect a portion of the fluid and thereby contain the leak until the leak detection sensor embedded entirely in the containment material or in contact with the external surface of the structure and covered by the containment material detects the leakage of the fluid into the containment material achieves several advantageous effects.

First of all, the sensor, which is strategically placed in a weak position of the structure, is protected from adverse mechanical effects that are caused by a failure in the structure. In particular the sensor remains operational without being subject to adverse "cross-sensitivity" issues encountered in particular with sensitive leak detection sensors that respond to small mechanical stress. This can for example occur when a composite layer is arranged on top of the leak detection sensor. Mechanical stress or strain in that layer has an adverse effect on the response of the sensor and can lead to incorrect readings.

Secondly, the absorbing properties of the containment material make the leak detectable without immediate leakage of the fluid outside of the structure. This enables a detection of the leak and leaves some time for maintenance actions to be undertaken without incurring significant losses.

Thirdly, the containment material does not need to be covering all of the outer surface of the structure which leads to significant reductions in costs and maintenance. Existing pipes, tanks or other structures enclosing a fluid can be upgraded by installing a leak detection sensor covered by or embedded in a containment material that is configured to absorb the fluid in the event of a leak and delay leakage of the fluid outside the structure.

In the context of this invention, the term "fluid" refers to either a gas or a liquid.

According to an embodiment, the containment material comprises at least one among: a porous material comprising closed non connected cavities, a porous material comprising open connected cavities, a flexible material configured to expand and form a cavity when subjected to pressure from the fluid.

A porous material with closed non connected cavities is better at containing the fluid. For example, the barriers between the non-connected cavities can be thin enough to break under the pressure exerted by the fluid, allowing a slow progression of the fluid through the porous material. A porous material with open connected cavities offers a larger volume for the fluid to progress into the containment material, while reducing the service pressure due to the compressible air volume entrapped. Such a material can advantageously be combined with an outer non porous hull to stop the leak from expanding outside of the structure. The porous material with connected cavities can also be enclosed by a porous material having closed non connected cavities or any other barrier to the fluid flow. A flexible material can be used so that the pressure exerted by the fluid thereon forces a deformation of the material to form a protrusion.

According to an embodiment, the containment material is a porous material that absorbs the fluid in the event of a leak and delays leakage of the fluid outside of the structure.

A porous material is particularly efficient at containing a leak for a predetermined time, typically a few hours or a few days in order to implement repair operations at the leakage site in a timely manner. An effect of a porous material is to provide enough space for a fluid to scatter into the porosities while however significantly slowing down the flow of the fluid through the containment material. Typically, the containment material reduces the pressure exerted by the fluid by slowly absorbing it without allowing it to flow outside of the containment material. The time available before a leaked fluid reaches the outer portion of the containment material can be adjusted by controlling the ratio void/volume and the thickness of the containment structure.

According to an embodiment, the containment material comprises at least one among: a fiber-based material, a textile material, foam, a 3d printed porous material, a porous adhesive.

In particular, the structure of the containment material can be made of silicones, rubber materials, thermoplastic elastomers, shape-memory polymers to name a few. Other materials such as polyamides or polyesters for example can also be used.

According to an embodiment, the containment material comprises a textile material comprising a three-dimensional porous structure.

Typically, the containment material can be a three-dimensional textile or spacer fabric, that is to say a textile that is made of interwoven, wrapped or knit fibers forming a porous structure in three dimensions. The three-dimensional fabric can typically be made of polyester, polyamides or fiber materials such as fibers made of carbon, glass or aramide. Advantageously the porosities do not form a continuous open path from the outer surface of the structure to the outside, thereby efficiently slowing down the progress of the fluid through the containment material. In practice, the containment material is made of discontinuous or non-connected cavities or pores. As the fluid progresses through the containment material, it does so progressively by diffusing very slowly though the structure comprising these non-connected porosities.

Alternatively the porosities may comprise connected cavities. In this alternative embodiment a second barrier in the form of an outer hull can prevent leakage for a longer period of time.

According to an embodiment, the containment material is made of a superposition of layers, each layer comprising at least one among: a fiber-based material, a textile material, foam, a 3d printed porous material, a porous adhesive.

By stacking layers of the same or different containment material, the invention can further increase the delay between the moment when fluid enters into contact with the containment material and the moment when the fluid reaches the environment outside of the containment material. This delay is achieved due to the at least one cavity in the containment material which allows keeping the pressure exerted by the fluid on the containment material or rate at which that pressure builds up low.

According to an embodiment, at least two different layers of the superposition of layers comprise a leak detection sensor.

Adding more than one leak detection sensor in more than one layer allows a more precise detection of the progression of the fluid so that the repair operations can be planned in a timely fashion.

According to the invention, the protective system further comprises an outer hull enclosing the containment material.

According to the invention, the at least one portion of an external surface comprises a structure repair element thereon.

The protective system of the invention is particularly suitable for reinforcing weak portions of a structure enclosing a fluid. Such weak portions are often identified as being portions that were already repaired once and which thereby generate a higher risk of being subject to a further leakage event. Placing the containment material over such a structure repair element is a particularly advantageous embodiment of the invention.

According to an embodiment, the containment system has a thickness in a range between 1 mm and 30 cm.

The invention also pertains to a method for protecting a structure enclosing a fluid, such as a pipe or tank enclosing a fluid, the method comprising:
- installing at least one leak detection sensor on at least one portion of an external surface of the structure;
- applying a containment material on the at least one portion of the external surface of the structure, the at least one portion of the external surface of the structure corresponding to a fraction of the external surface of the structure, so that the containment material covers or encompasses the at least one leak detection sensor wherein the containment material is configured to collect at least a portion of the fluid in at least one cavity formed in the containment material thereby containing leakage of the fluid outside of the structure in the event of a leak in the structure in the at least one portion wherein leakage of the fluid into the containment material triggers a detection of the leak by the leak detection sensor;
- arranging (104) an outer hull (8) enclosing the containment material.

According to an embodiment, the method further comprises, prior to the steps of installing the at least one leak detection sensor and applying the containment material:
- installing a structure repair element on the at least one portion of the external surface of the structure.

According to an embodiment, the method further comprises:
- arranging an outer hull enclosing the containment material.

According to an embodiment, the method further comprises:
- applying the containment material in a non-cured state on the at least one portion of the external surface of the structure;
- applying a fluid under pressure into the containment material to generate cavities forming a porous structure in the containment material;
- curing the containment material.

The term "non-cured" is to be understand as a state in which the containment material can still be reshaped or reformed. Similar terms such as "non-set", "non-solidified" or "non-hardened" can equally be used instead of "non-cured" within the meaning of this invention. The process described above is particularly efficient in generating porosities in a structure.

According to an embodiment, the method further comprises:
- removing the fluid applied to the containment material to create a porous structure with cavities under a pressure lower than the atmospheric pressure.

By pumping a gas introduced into the containment material, the protective system can be rendered more efficient as it is then capable of better absorbing the leaked fluid.

### BRIEF DESRIPTION OF THE DRAWINGS

The present disclosure will hereinafter be described in conjunction with the following drawing figures, wherein like numerals denote like elements, and:
Fig. 1 is a schematic representation of a protection system, which does not implement all features of the current invention.
Fig. 2 is a schematic representation of a protection system according to a exemplary embodiment;
Fig. 3 is a schematic representation of a protection system according to a second exemplary embodiment;
Fig. 4 is a schematic representation of a protection system according to a third exemplary embodiment;
Fig. 5 is a flowchart showing exemplary steps of a method for protecting a structure according to an exemplary embodiment.

### DETAILED DESCRIPTION

The invention pertains to a protective system for a structure enclosing a fluid and to a method for making such a protective system. The invention is particularly suitable for providing a secondary containment structure for a pipe or tank so that a leak under the secondary containment structure remains contained under the secondary containment structure during a time sufficient for a repair operation to seal the leak to take place.

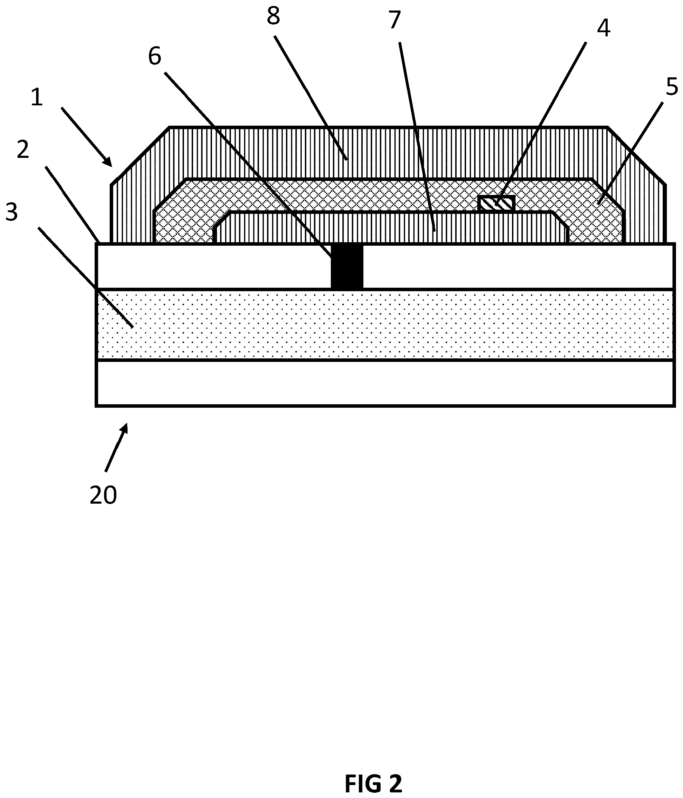

Illustrative exemplary embodiments of a protective system according to the invention are shown in figures 2, 3 and 4.

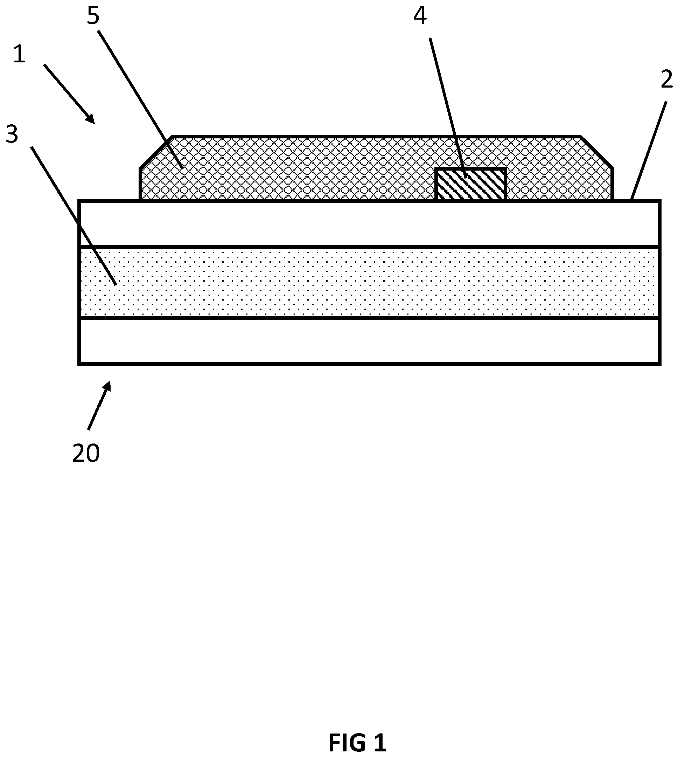

Figure 1 schematically shows a structure 20 enclosing a fluid 3 that is a pipe according to a longitudinal section thereof. The fluid 3 can be any liquid or gas that is typically carried by pipes or can be stored in tanks. Some of these fluids are particularly corrosive, toxic, are carried at high temperatures or at a high pressure. On a portion of the external surface 2 of the structure 20 a leak detection sensor 4 is placed. Such a sensor is well known in the art and be configured to detect a fluid on the external surface 2.

The leak detection sensor 4 can advantageously be placed at particularly sensitive locations that are known to be more prone to wear and deformation, such as curved sections, sections that are subject to temperature differences (temperature gradients or regular changes in the local temperature) or locations that can be subject to external hazards that expose the structure 20 to a higher risk of failure.

The leak detection sensor 4 can for example comprise a nanotechnology-based sensor or any sensor that is capable of detecting the fluid, a pressure exerted on the sensor 4 or any other parameters that could be related to a leak. Some of these sensors typically detect a change in resistivity in a sensitive medium of the sensor. There is no limitation to the type of leak detection sensor that can be used in the context of this invention.

The leak detection sensor 4 is covered by a containment material 5 or is totally embedded in the containment material 5. This containment material is advantageously 1 mm to 1 cm thick and forms a protective layer around the portion of the external surface 2 and the leak detection sensor 4. The containment material 5 comprises voids also called pores or cavities. In the embodiment illustrated on figure 1 these pores are advantageously non connected so that there is no easy passage for the fluid 3 therethrough, while still allowing the fluid to slowly progress through the volume of the containment material 5.

The containment material can for example be or comprise any one of: a fiber-based material, a textile material, foam, in particular open-cell foam, a porous adhesive. The textile material is for example a three-dimensional textile, for example made of a composite material including textile fibers and/or a polymerizable resin that can be set or cured to change from a soft shape to a hardened shape. Such a three-dimensional textile can be made of polyester material, polyamides or fiber materials such as fibers made of carbon, glass or aramide.

The system formed by the leak detection sensor 4 and the containment material 5 is referred to as the protective system 1.

Figure 2 shows an advantageous embodiment of the protective system 1 of the invention. In this figure, the structure 20 comprises a defect 6 that is repaired with a structure repair element 7. The structure repair element 7 is typically a composite material that seals an existing leak or weak portion of the structure 20. These composite materials are usually made of fiber reinforced plastics the properties of which are adjusted based on the technical specifications of the structure 20, the operational parameters thereof and the specificities (in particular the geometry or topology) of the defect 6. The adhesive used in the composite comprising the fibers is typically selected to offer the best sealing properties based on these parameters.

The structure repair element 7 is typically referred to in the technical field as a "repair wrap". Even though these structure repair elements 7 provide a good protection to the structure 20, they still represent weak sections of the structure 20 and require a more specific monitoring to ensure that a worsening of the first defect 6 does not lead to a leak that could then be more serious and cause greater loss, damage or hazard. Such repair wraps constitute particularly advantageous locations for applying the protective system 1 of the invention.

As illustrated on figure 2, the leak detection sensor 4 is then placed on the repair wrap or can even be partially embedded into the structure repair element 7. The sensor can also be placed on the containment material 5, so long as it is still capable of detecting the leakage of the fluid into the containment material 5. A sensor placed on the containment material 5 is considered in the context of this invention as being encompassed by the embodiments in which the sensor is embedded in the containment material 5. The containment material 5 is covering the leak detection sensor 4 and the structure repair element 7. The leak detection sensor 4 can also be entirely or partially part of the containment material 5 as discussed in connection with figure 1.

To further contain a leakage of the fluid 3 through the containment material 5 to the environment outside of the protective system 1, the containment material 5 is covered by an outer hull 8. The outer hull can for example be made of the same composite material as the one which the structure repair element 7 is made of. The outer hull 8 can also be made of any other material that offers a similar type of protection from leaks.

By using an outer hull 8 covering the containment material 5, it is possible to further increase the voids versus volume ratio of the containment material 5 and typically have more pores connected together. The pressure inside the pores can also be better controlled and can for example be set at a pressure that is lower than atmospheric pressure.

The effect of the containment material 5 is to act as a spacer that comprises cavities acting as a pressure reducing structure. The containment material 5 essentially acts as a spring reducing the pressure level from the fluid that enters the containment material 5. This is more particularly due to the compressible nature of the gas remaining in the cavities of the containment material. As the fluid attempts to pass through the containment material, any fluid advantageously in gas form will be compresses and thereby slow down the flow of the fluid 3 into the containment material 5.

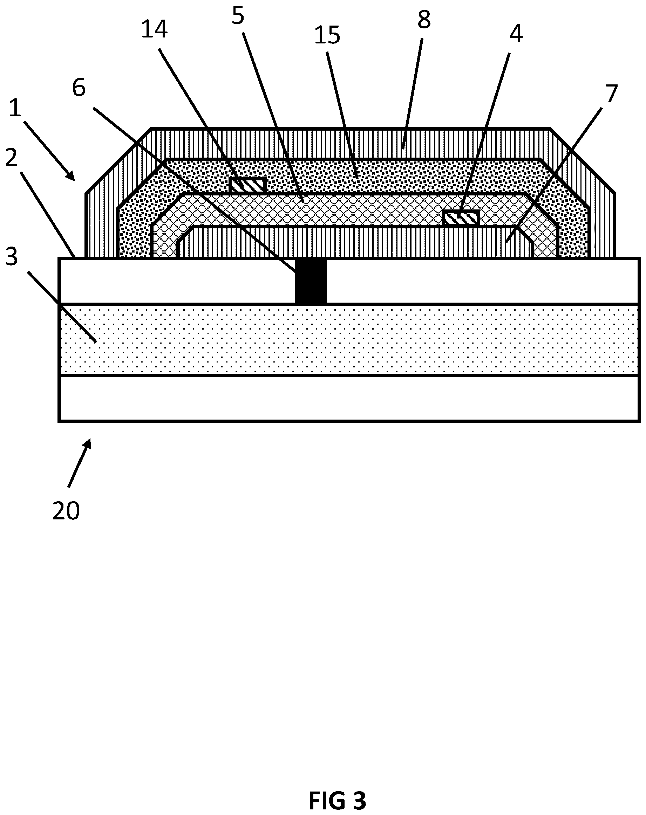

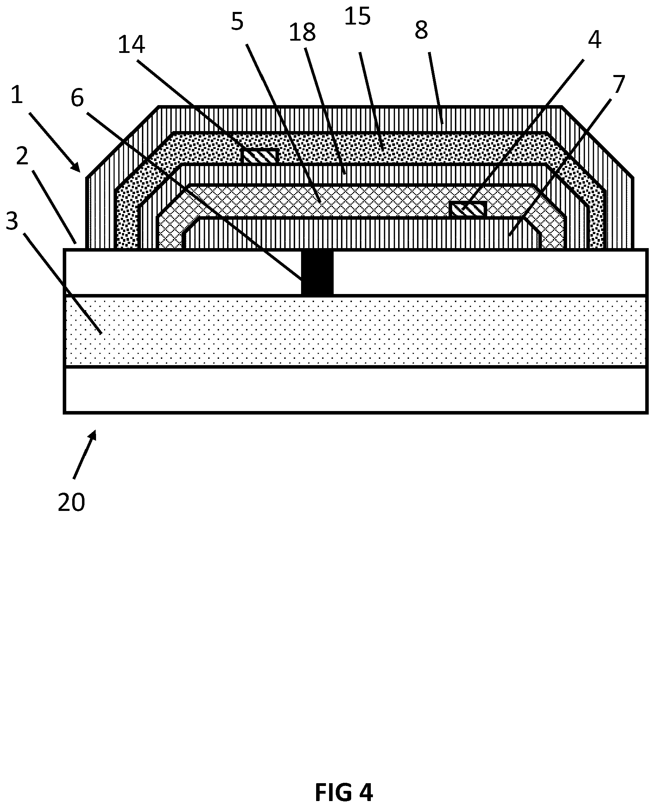

This dampening effect can be enhanced by increasing the thickness of the containment material 5, or by using a more complex arrangement as represented in figures 3 and 4.

Figure 3 represents another embodiment of the protective structure 1 comprising two different containment materials 5, 15 each comprising a leak detection sensor 4, 14. Such an arrangement provides further information about the progression of the fluid 3 through the different layers of containment material 5, 15. Leak detection sensor 4 will be able to detect the fluid 3 as it progresses into containment material 5 and leak detection 14 will be able to detect the fluid 3 as it progresses into containment material 15. By noticing a progression of the fluid 3 into a new layer provided as information from any one of the leak detection sensors, a user will be aware of the urgency to implement appropriate corrective steps to stop the leak from exiting the protective system 1. A rate at which the fluid 3 progresses from one containment material 5, 15 into the other can also be analyzed to determine the severity of the damage to be repaired or contained.

Figure 4 represents a further exemplary embodiment of the invention in which several layers of containment material 5, 15 are arranged but wherein each of these layers is separated by an intermediary layer 18. This intermediary layer 18 acts as an outer hull 8 between two containment materials 5, 15. This further slows down the propagation of the fluid 3 as it diffuses through the porosities of the containment material 5, 15.

The containment material 5, 15 also acts as a buffer that prevents the leak detection sensor 4, 14 from being subject to mechanical stress or strain from the outer hull 8 or any other external influence that would bias the detection or worsening of a weak portion of the structure 20. The containment material 5, 15 essentially then acts as a mechanical decoupling element that prevents "cross-sensitivity" at the leak detection sensor 4, 14 and improves the accuracy of the leak detection sensor 4, 14.

Although not illustrated as such in figures 1-4, the protective system 1 can further advantageously be arranged along a circumference of the structure 20, in particular when the structure 20 is a pipe. Arranging the protective system 1 around a circumference can further increase the stability of the protective system 1 and extend the flow of the fluid 3 in the porous containment material 5, 15.

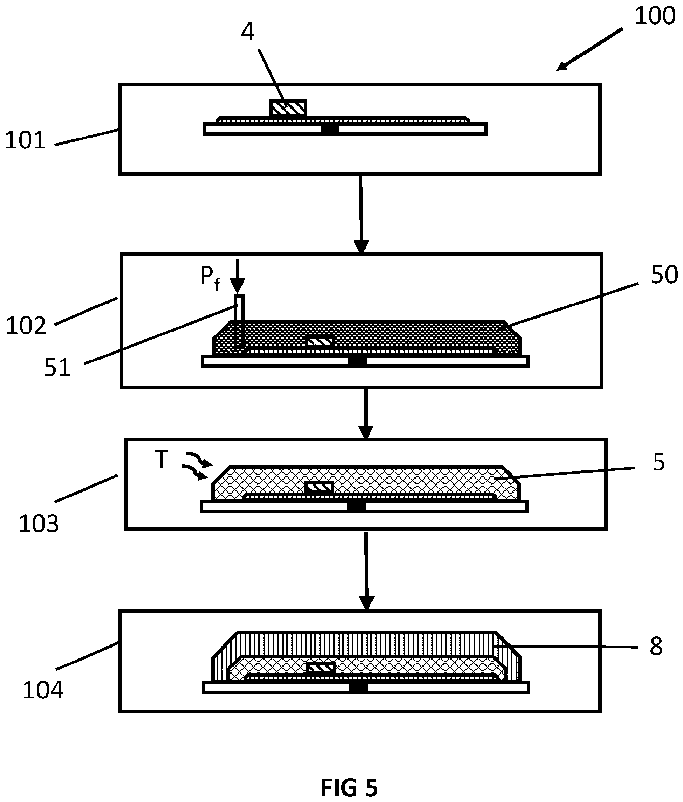

The invention also pertains to a method for protecting a structure 20 enclosing a fluid 3. Figure 5 is a flowchart providing some steps that can be part of such a method 100. It is to be noted that the flowchart of figure 5 comprises optional steps and is illustrative of several methods that can be implemented to construct the exemplary embodiments presented above.

In a first step, a leak detection sensor 4 is installed 101 on at least one portion of an external surface 2 of a structure 20. It is perfectly possible to install more than one leak detection sensor 4, for example to arrange different sensors that form an array of sensors. The different leak detection sensors 4 can be of the same type or different sensors relying on different sensing technologies. Advantageously, a composite layer is placed between the leak detection sensor 4 and the external surface 2 of the structure 20 (of the same type as structure repair element 7).

A particularly advantageous location for the leak detection sensors is at an axial end of a repair wrap and along an axis or preferred direction of the defect (or weakness if any) of the structure 20.

This first step can also comprise a step of sealing a weak spot such as a defect 6 of the structure 20 with a structure repair element 7. The leak detection sensor 4 is then arranged either on or partially embedded into the structure repair element 7. The structure repair element 7 can typically also merely be a composite layer acting as a substrate for the containment material 5 and the leak detection sensor 4, in particular to improve adhesion of both onto the external surface 2.

In order to protect the structure 20, a containment material 5 is applied 102 on the at least one portion of the external surface 2 of the structure 20 that comprises the leak detection sensor 4.

Since the containment material 5 is configured to collect the fluid 3 with a porous structure such as that obtained with a three-dimensional textile, it is possible to construct such a porous structure as illustrated in figure 5 at the steps of applying 102 the containment material and hardening it at step 103. Typically, the containment material 5 is a composite material comprising a resin and fibers. When the containment material 5 is applied, it can be in a non-cured state (also referred to as "non-solidified", "non-hardened"). In particular, at least one constituent of the containment material 5 can be in liquid form, for example a resin. In order to create pores in this non-hardened containment material 50, it is possible to inject 51 a fluid, and more particularly a gas, into the non-hardened containment material 50. This injection can typically occur under a pressure of about 1 bar.

To inject the gas into the non-hardened containment material 50 a hose can be applied to the non-hardened containment material 50. In order to avoid puncturing the resin of the non-hardened containment material 50, a foil or film bubble could be arranged inside the non-hardened containment material 50.

As illustrated at step 103, the non-hardened containment material 50 can be hardened. This can for example occur either by increasing the temperature, lowering the external pressure, subjecting the non-hardened containment material 50 to radiation or adding a constituent to the non-hardening containment material 50 that leads to a hardening of the structure using known curing mechanisms involving heat, radiation or chemically induced processes.

It is further possible to arrange 104 an outer hull 8 onto the containment material 5 using known deposition processes.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. A protective system (1) for a structure (20) enclosing a fluid (3), such as a pipe or tank enclosing a fluid, the protective system (1) comprising:
- a structure repair element (7) on at least one portion of an external surface of the structure (20) corresponding to a fraction of the external surface of the structure,
- a containment material (5) placed over the structure repair element (7), ;
- at least one leak detection sensor (4) arranged so that the containment material (5) covers or encompasses the at least one leak detection sensor (4);
wherein the containment material (5) is configured to collect at least a portion of the fluid in at least one cavity formed in the containment material (5) thereby containing leakage of the fluid outside of the structure (20) in the event of a leak in the structure (20) in the at least one portion wherein leakage of the fluid into the containment material (5) triggers a detection of the leak by the leak detection sensor (4);
- an outer hull (8) enclosing the containment material (5).

2. The protective system (1) according to claim 1, wherein the containment material (5) comprises at least one among: a porous material comprising closed non connected cavities, a porous material comprising open connected cavities, a flexible material configured to expand and form a cavity when subjected to pressure from the fluid.

3. The protective system (1) according to any one of the preceding claims, wherein the containment material (5) is a porous material that absorbs the fluid in the event of a leak and contains leakage of the fluid outside of the structure (20).

4. The protective system (1) according to any one of the preceding claims, wherein the containment material (5) comprises at least one among: a fiber-based material, a textile material, foam, a 3d printed porous material; a porous adhesive.

5. The protective system (1) according to any one of the preceding claims wherein the containment material (5) comprises a textile material comprising a three-dimensional porous structure.

6. The protective system (1) according to any one of the preceding claims, wherein the containment material (5) is made of a superposition of layers, each layer comprising at least one among: a porous material comprising closed non connected cavities, a porous material comprising open connected cavities, a flexible material configured to expand and form a cavity when subjected to pressure from the fluid, a fiber-based material, a textile material, foam, a porous adhesive.

7. The protective system (1) according to claim 6, wherein at least two different layers of the superposition of layers comprise a leak detection sensor (4, 14).

8. The protective system (1) according to any one of the preceding claims, wherein the containment system has a thickness in a range between 1 mm and 30 cm.

9. A method (100) for protecting a structure (20) enclosing a fluid (3), such as a pipe or tank enclosing a fluid, the method comprising:
- installing (101) at least one leak detection sensor (4, 14) on at least one portion of an external surface (2) of the structure;
- applying (102) a containment material (5) on the at least one portion of the external surface of the structure (20), the at least one portion of the external surface of the structure (20) corresponding to a fraction of the external surface of the structure, so that the containment material covers or encompasses the at least one leak detection sensor wherein the containment material is configured to collect at least a portion of the fluid in at least one cavity formed in the containment material thereby containing leakage of the fluid outside of the structure in the event of a leak in the structure in the at least one portion wherein leakage of the fluid into the containment material triggers a detection of the leak by the leak detection sensor
- arranging (104) an outer hull (8) enclosing the containment material.

10. The method according to claim 9, further comprising, prior to the steps of installing the at least one leak detection sensor and applying the containment material:
- installing a structure repair element (7) on the at least one portion of the external surface of the structure (20).

11. The method according to any one of claims 9 to 10, further comprising:
- applying (102) the containment material in a non-cured state (50) on the at least one portion of the external surface of the structure (20);
- applying a fluid under pressure (51) into the containment material to generate cavities forming a porous structure in the containment material;
- curing (103) the containment material.

12. The method according to claim 11, further comprising:
- removing the fluid applied to the containment material to create a porous structure with cavities under a pressure lower than the atmospheric pressure.

## Patentansprüche

1. Schutzsystem (1) für eine Struktur (20), die ein Fluid (3) umschließt, wie eine Rohrleitung oder ein Tank, die ein Fluid umschließen, das Schutzsystem (1) umfassend:
- ein Strukturreparaturelement (7) an mindestens einem Teil einer externen Oberfläche der Struktur (20), der einem Bruchteil der externen Oberfläche der Struktur entspricht,
- ein Eindämmungsmaterial (5), das über dem Strukturreparaturelement (7) platziert ist;
- mindestens einen Leckerkennungssensor (4), der angeordnet ist, sodass das Eindämmungsmaterial (5) den mindestens einen Leckerkennungssensor (4) bedeckt oder umhüllt;
wobei das Eindämmungsmaterial (5) konfiguriert ist, um mindestens einen Teil des Fluids in mindestens einem Hohlraum zu sammeln, der in dem Eindämmungsmaterial (5) ausgebildet ist, wobei dadurch im Falle eines Lecks in der Struktur (20) in dem mindestens einen Teil eine Leckage des Fluids nach außerhalb der Struktur (20) eingedämmt wird, wobei die Leckage des Fluids in das Eindämmungsmaterial (5) eine Erkennung des Lecks durch den Leckerkennungssensor (4) auslöst;
- eine Außenhülle (8), die das Eindämmungsmaterial (5) umschließt.

2. Schutzsystem (1) nach Anspruch 1, wobei das Eindämmungsmaterial (5) mindestens eines umfasst aus: einem porösen Material, umfassend geschlossene, nicht verbundene Hohlräume, einem porösen Material, umfassend offene, verbundene Hohlräume, oder einem flexiblen Material, das konfiguriert ist, um sich auszudehnen und einen Hohlraum auszubilden, wenn es einem Druck von dem Fluid ausgesetzt wird.

3. Schutzsystem (1) nach einem der vorstehenden Ansprüche, wobei das Eindämmungsmaterial (5) ein poröses Material ist, das im Falle eines Lecks das Fluid aufnimmt und die Leckage des Fluids nach außerhalb der Struktur (20) eindämmt.

4. Schutzsystem (1) nach einem der vorstehenden Ansprüche, wobei das Eindämmungsmaterial (5) mindestens eines umfasst aus: einem faserbasierten Material, einem Textilmaterial, Schaum, einem 3D-gedruckten porösen Material; einem porösen Klebstoff.

5. Schutzsystem (1) nach einem der vorstehenden Ansprüche, wobei das Eindämmungsmaterial (5) ein Textilmaterial, umfassend eine dreidimensionale poröse Struktur, umfasst.

6. Schutzsystem (1) nach einem der vorstehenden Ansprüche, wobei das Eindämmungsmaterial (5) aus einer Überlagerung von Schichten hergestellt ist, jede Schicht umfassend mindestens eines aus: einem porösen Material, umfassend geschlossene, nicht verbundene Hohlräume, einem porösen Material, umfassend offene, verbundene Hohlräume, einem flexiblen Material, das konfiguriert ist, um sich auszudehnen und einen Hohlraum auszubilden, wenn es dem Druck von dem Fluid ausgesetzt wird, einem faserbasierten Material, einem Textilmaterial, Schaum, einem porösen Klebstoff.

7. Schutzsystem (1) nach Anspruch 6, wobei mindestens zwei unterschiedliche Schichten der Überlagerung von Schichten einen Leckerkennungssensor (4, 14) umfassen.

8. Schutzsystem (1) nach einem der vorstehenden Ansprüche, wobei das Eindämmungssystem eine Dicke in einem Bereich zwischen 1 mm und 30 cm aufweist.

9. Verfahren (100) zum Schützen einer Struktur (20), die ein Fluid (3) umschließt, wie eine Rohrleitung oder ein Tank, die ein Fluid umschließen, das Verfahren umfassend:
- Installieren (101) mindestens eines Leckerkennungssensors (4, 14) an mindestens einem Teil einer externen Oberfläche (2) der Struktur;
- Aufbringen (102) eines Eindämmungsmaterials (5) auf den mindestens einen Teil der externen Oberfläche der Struktur (20), wobei der mindestens eine Teil der externen Oberfläche der Struktur (20) einem Bruchteil der externen Oberfläche der Struktur entspricht, sodass das Eindämmungsmaterial den mindestens einen Leckerkennungssensor bedeckt oder umgibt, wobei das Eindämmungsmaterial konfiguriert ist, um mindestens einen Teil des Fluids in mindestens einem Hohlraum, der in dem Eindämmungsmaterial ausgebildet ist, zu sammeln, wobei dadurch im Falle eines Lecks in der Struktur in dem mindestens einem Teil die Leckage des Fluids nach außerhalb der Struktur eingedämmt wird, wobei die Leckage des Fluids in das Eindämmungsmaterial eine Erkennung des Lecks durch den Leckerkennungssensor auslöst;
- Anordnen (104) einer Außenhülle (8), die das Eindämmungsmaterial umschließt.

10. Verfahren nach Anspruch 9, ferner umfassend, vor den Schritten des Installierens des mindestens einen Leckerkennungssensors und des Aufbringens des Eindämmungsmaterials:
- Installieren eines Strukturreparaturelements (7) an dem mindestens einen Teil der externen Oberfläche der Struktur (20).

11. Verfahren nach einem der Ansprüche 9 bis 10, ferner umfassend:
- Aufbringen (102) des Eindämmungsmaterials in einem nicht ausgehärteten Zustand (50) auf mindestens einen Teil der externen Oberfläche der Struktur (20);
- Einbringen eines Fluids unter Druck (51) in das Eindämmungsmaterial, um Hohlräume zu erzeugen, die eine poröse Struktur in dem Eindämmungsmaterial ausbilden;
- Aushärten (103) des Eindämmungsmaterials.

12. Verfahren nach Anspruch 11, ferner umfassend:
- Entfernen des Fluids, das auf das Eindämmungsmaterial aufgebracht wurde, um eine poröse Struktur mit Hohlräumen unter einem Druck zu erzeugen, der niedriger als der atmosphärische Druck ist.

## Revendications

1. Système de protection (1) pour une structure (20) renfermant un fluide (3), tel qu'un tuyau ou un réservoir renfermant un fluide, le système de protection (1) comprenant :
- un élément de réparation de structure (7) sur au moins une partie d'une surface externe de la structure (20) correspondant à une fraction de la surface externe de la structure,
- un matériau de confinement (5) placé sur l'élément de réparation de structure (7) ;
- au moins un capteur de détection de fuite (4) disposé de sorte que le matériau de confinement (5) couvre ou englobe l'au moins un capteur de détection de fuite (4) ;
dans lequel le matériau de confinement (5) est conçu pour recueillir au moins une partie du fluide dans au moins une cavité formée dans le matériau de confinement (5), contenant ainsi des fuites du fluide à l'extérieur de la structure (20) en cas d'une fuite dans la structure (20) dans l'au moins une partie, dans lequel les fuites du fluide dans le matériau de confinement (5) déclenchent une détection de la fuite par le capteur de détection de fuite (4) ;
- une coque extérieure (8) renfermant le matériau de confinement (5).

2. Système de protection (1) selon la revendication 1, dans lequel le matériau de confinement (5) comprend au moins l'un parmi : un matériau poreux comprenant des cavités fermées non liées, un matériau poreux comprenant des cavités ouvertes liées, un matériau souple conçu pour se dilater et former une cavité lorsqu'il est soumis à la pression du fluide.

3. Système de protection (1) selon l'une quelconque des revendications précédentes, dans lequel le matériau de confinement (5) est un matériau poreux qui absorbe le fluide en cas de fuite et contient les fuites du fluide à l'extérieur de la structure (20).

4. Système de protection (1) selon l'une quelconque des revendications précédentes, dans lequel le matériau de confinement (5) comprend au moins l'un parmi : un matériau à base de fibres, un matériau textile, une mousse, un matériau poreux imprimé en 3D ; un adhésif poreux.

5. Système de protection (1) selon l'une quelconque des revendications précédentes, dans lequel le matériau de confinement (5) comprend un matériau textile comprenant une structure poreuse tridimensionnelle.

6. Système de protection (1) selon l'une quelconque des revendications précédentes, dans lequel le matériau de confinement (5) est constitué d'une superposition de couches, chaque couche comprenant au moins l'un parmi : un matériau poreux comprenant des cavités fermées non liées, un matériau poreux comprenant des cavités ouvertes liées, un matériau souple conçu pour se dilater et former une cavité lorsqu'il est soumis à la pression du fluide, un matériau à base de fibres, un matériau textile, une mousse, un adhésif poreux.

7. Système de protection (1) selon la revendication 6, dans lequel au moins deux couches différentes de la superposition de couches comprennent un capteur de détection de fuite (4, 14).

8. Système de protection (1) selon l'une quelconque des revendications précédentes, dans lequel le système de confinement a une épaisseur comprise entre 1 mm et 30 cm.

9. Procédé (100) de protection d'une structure (20) renfermant un fluide (3), tel qu'un tuyau ou un réservoir renfermant un fluide, le procédé comprenant :
- l'installation (101) d'au moins un capteur de détection de fuite (4, 14) sur au moins une partie d'une surface externe (2) de la structure ;
- l'application (102) d'un matériau de confinement (5) sur l'au moins une partie de la surface externe de la structure (20), l'au moins une partie de la surface externe de la structure (20) correspondant à une fraction de la surface externe de la structure, de sorte que le matériau de confinement couvre ou englobe l'au moins un capteur de détection de fuite, dans lequel le matériau de confinement est conçu pour recueillir au moins une partie du fluide dans au moins une cavité formée dans le matériau de confinement, contenant ainsi des fuites du fluide à l'extérieur de la structure en cas d'une fuite dans la structure dans l'au moins une partie, dans lequel les fuites du fluide dans le matériau de confinement déclenchent une détection de la fuite par le capteur de détection de fuite
- la disposition (104) d'une coque extérieure (8) renfermant le matériau de confinement.

10. Procédé selon la revendication 9, comprenant en outre, avant les étapes consistant à installer l'au moins un capteur de détection de fuite et à appliquer le matériau de confinement :
- l'installation d'un élément de réparation de structure (7) sur l'au moins une partie de la surface externe de la structure (20).

11. Procédé selon l'une quelconque des revendications 9 à 10, comprenant en outre :
- l'application (102) du matériau de confinement dans un état non durci (50) sur l'au moins une partie de la surface externe de la structure (20) ;
- l'application d'un fluide sous pression (51) dans le matériau de confinement pour générer des cavités formant une structure poreuse dans le matériau de confinement ;
- le durcissement (103) du matériau de confinement.

12. Procédé selon la revendication 11, comprenant en outre :
- l'élimination du fluide appliqué au matériau de confinement pour créer une structure poreuse avec des cavités sous une pression inférieure à la pression atmosphérique.
